# EUROPÄISCHE PATENTANMELDUNG

(11) **EP 4 424 755 A1**
(43) Veröffentlichungstag der Anmeldung: **04.09.2024**
(21) Anmeldenummer: 23159777.4
(22) Anmeldetag: 02.03.2023
(51) Int. Cl.: C08J 9/00, C08G 75/045, C08J 9/06, C08J 9/12, C09K 21/14

(54) **THIOL-ACRYLAT BASIERTES REAKTIONSGEMISCH ZUR HERSTELLUNG EINES BRANDSCHUTZELEMENTS, DARAUS HERGESTELLTES BRANDSCHUTZELEMENT UND VERFAHREN ZUR HERSTELLUNG EINES BRANDSCHUTZELEMENTS**

(71) Anmelder: Hilti Aktiengesellschaft, 9494 Schaan (LI)
(72) Erfinder: Conceicao Alves Juster, Filipa, 86899 Landsberg am Lech (DE); Wehner, Marius, 82061 Neuried (DE); Paetow, Mario, 86899 Landsberg am Lech (DE); Reineck, Marie, 86916 Kaufering (DE)
(74) Vertreter: Hilti Aktiengesellschaft Corporate Intellectual Property

(57) **Zusammenfassung**

Die vorliegende Erfindung betrifft ein schäumbares Thiol-Acrylat basiertes Reaktionsgemisch zur Herstellung von vorgeformten Brandschutzelementen sowie ein aus dem erfindungsgemäßen Reaktionsgemisch hergestelltes Brandschutzelement. Ferner betrifft die Erfindung ein Verfahren zur Herstellung eines Brandschutzelementes und ein Bauteil umfassend ein erfindungsgemäßes Brandschutzelement. Das Reaktionsgemisch umfasst eine polyfunktionelle (Meth)acrylatverbindung und eine polyfunktionelle Thiolverbindung als Härter.

## Beschreibung

Die vorliegende Erfindung betrifft ein schäumbares Thiol-Acrylat basiertes Reaktionsgemisch zur Herstellung von vorgeformten Brandschutzelementen sowie ein aus dem erfindungsgemäßen Reaktionsgemisch hergestelltes Brandschutzelement. Ferner betrifft die Erfindung ein Verfahren zur Herstellung eines Brandschutzelementes und ein Bauteil umfassend ein erfindungsgemäßes Brandschutzelement. Das Reaktionsgemisch umfasst eine polyfunktionelle (Meth)acrylatverbindung und eine polyfunktionelle Thiolverbindung als Härter.

Beim Verlegen von Leitungen, wie z.B. Rohrleitungen, elektrische Leitungen und dergleichen, werden diese durch Durchgangsöffnungen in Bauelementen, insbesondere Gebäudebauteilen, wie Wände und Decken, geführt. Um den Durchtritt von Feuer und Rauchgasen im Brandfall zu verhindern, werden zwischen den Innenwänden der Durchgangsöffnungen und den hindurchgeführten Leitungen Brandschutzabschottungsmaterialen, wie beispielsweise Brandschutzkissen, Brandschutzsteine und Produkte für Fugenanwendungen, eingebracht.

Vorgeformte Brandschutzelemente, wie beispielsweise Brandschutzsteine, werden üblicherweise durch Mehrkomponentenextrusion und Aufschäumen in einer vordefinierten Form hergestellt. Vorgeformte Brandschutzelemente können als Formteile verwendet oder weiterverarbeitet werden. Hierzu wird im überwiegenden Teil der Fälle Polyurethan (PU) als Bindemittelmatrix verwendet.

Solche PU-basierten Schäume sind aus HSE-Gesichtspunkten (HSE = Health, Safety and Enviroment) bedenklich, da diese durch die Verwendung gefährlicher Isocyanate hergestellt werden. Ein Beispiel solcher Isocyanate ist das Diphenylmethandiisocyanat, welches u.a. mit dem H-Satz H351 "Kann vermutlich Krebs erzeugen" gekennzeichnet ist.

Es besteht daher ein großer Bedarf an der Bereitstellung von Reaktionsgemischen, welche zur Herstellung von vorgeformten, geschäumten Brandschutzelementen geeignet sind und die ohne den Einsatz von Isocyanaten auskommen.

Aufgabe der Erfindung ist es daher, ein Reaktionsgemisch zur Herstellung von vorgeformten, geschäumten Brandschutzelementen bereitzustellen, welches in der Herstellung ohne den Einsatz von Isocyanate auskommt und damit die aus dem Stand der Technik bekannten Polyurethan-basierten Brandschutzelemente unter HSE-Gesichtspunkten übertrifft. Die Brandschutzeigenschaften von daraus hergestellten Brandschutzelementen sollen dabei mindestens vergleichbar sein mit den Brandschutzeigenschaften von aus dem Stand der Technik bekannten Brandschutzelementen auf Basis von Polyurethan. Insbesondere sollen sich die erfindungsgemäßen Brandschutzelemente durch eine erhöhte Aschebildung und verbesserte Expansionseigenschaften unter Temperatureinwirkung, wie beispielsweise im Brandfall, auszeichnen.

Die der Erfindung zu Grunde liegende Aufgabe wird gelöst durch ein Reaktionsgemisch gemäß Anspruch 1.

Das Reaktionsgemisch umfasst
i. mindestens eine polyfunktionelle (Meth)acrylat-Verbindung,
ii. mindestens eine polyfunktionelle Thiolverbindung,
iii. mindestens ein dämmschichtbildendes Brandschutz-Additiv,
iv. mindestens einen Katalysator und
v. mindestens ein Treibmittel.

Ein zweiter Gegenstand der Erfindung ist auch ein Verfahren zur Herstellung eines vorgeformten Brandschutzelements.

Ein dritter Gegenstand der Erfindung ist ferner ein aus dem erfindungsgemäßen Reaktionsgemisch oder ein durch das erfindungsgemäße Verfahren hergestelltes Brandschutzelement.

Ein vierter Gegenstand der Erfindung ist auch ein Bauteil umfassend ein erfindungsgemäßes Brandschutzelement.

Zum besseren Verständnis der Erfindung werden die folgenden Erläuterungen der hierin verwendeten Terminologie als sinnvoll erachtet. Im Sinne der Erfindung bedeutet:
- eine "*polyfunktionelle (Meth)acrylat Verbindung"* eine Verbindung die mindestens zwei (Meth)acrylat-Gruppen aufweist, die an organisches Grundgerüst gebunden sind;
- "(Meth)acryl.../...(meth)acryl...", dass sowohl die "Methacryl.../...methacryl..."- als auch die "Acryl.../...acryl... "-Verbindungen umfasst sein sollen;
- eine *"polyfunktionelle Thiolverbindung"* eine Verbindung, die mindestens zwei Thiolgruppen (-SH) aufweist, die an ein organisches Grundgerüst gebunden sind;
- "*Reaktionsgemisch"* ist eine Zusammensetzung, umfassend mindestens eine polyfunktionelle (Meth)acrylat Verbindung, mindestens eine polyfunktionelle Thiolverbindung, mindestens ein dämmschichtbildendes Additiv, mindestens einen Katalysator und mindestens ein Treibmittel. Dem Fachmann ist bekannt, dass beim Zusammenführen der einzelnen Bestandteile des Reaktionsgemisches sowohl eine Härtungs- als auch eine Schäumungsreaktion eintritt. Mit dem Begriff Reaktionsgemisch im Sinne der vorliegenden Erfindung sind daher alle Reaktionszustände von der initialen Mischung der Bestandteile bis zum Ablauf der vollständigen Härtungsreaktion umfasst.
- *"chemische Intumeszenz"* die Bildung einer voluminösen, isolierenden Ascheschicht durch aufeinander abgestimmte Verbindungen, die bei Hitzeeinwirkung miteinander reagieren;
- *"physikalische Intumeszenz"* die Bildung einer voluminösen, isolierenden Schicht durch Aufblähen einer Verbindung, die, ohne dass eine chemische Reaktion zwischen zwei Verbindungen stattgefunden hat, bei Hitzeeinwirkung Gase freisetzt, wodurch das Volumen der Verbindung um ein Vielfaches des ursprünglichen Volumens zunimmt;
- "*dämmschichtbildend*", dass im Brandfall ein fester mikroporöser Schaum entsteht, so dass die gebildete feinporige und dicke Schaumschicht, die sogenannte Aschekruste, je nach Zusammensetzung ein Substrat gegen Hitze isoliert;
- "*Treibmittel*" ein Sammelbegriff für physikalische und chemischer Treibmittel. Im Falle von chemischen Treibmitteln werden Treibmittelmischungen eingesetzt, die mindestens zwei Komponenten umfassen, die bei Kontaktierung miteinander die Bildung von Gasen als Treibmitteln hervorrufen, was zur Schäumung der Zusammensetzung führt.
- *"ein", "eine", "einer"* als Artikel vor einer chemischen Verbindungsklasse, z.B. vor dem Wort "(Methy)acrylat-Verbindung", dass eine oder mehrere unter diese chemische Verbindungsklasse fallende Verbindungen, z.B. verschiedene (Meth)acrylatVerbindungen gemeint sein können. In einer bevorzugten Ausführungsform ist mit diesem Artikel nur eine einzelne Verbindung gemeint;
- *"mindestens ein", "mindestens eine", "mindestens einer"* zahlenmäßig *"ein oder mehrere".* In einer bevorzugten Ausführungsform ist mit diesem Begriff zahlenmäßig *"ein", "eine", "einer"* gemeint;
- *"enthalten", "umfassen"* und *"beinhalten",* dass neben den genannten Bestandteilen noch weitere vorhanden sein können. Diese Begriffe sind einschließlich gemeint und umfassen daher auch *"bestehen aus". "Bestehen aus"* ist abschließend gemeint und bedeutet, dass keine weiteren Bestandteile vorhanden sein können. In einer bevorzugten Ausführungsform bedeuten die Begriffe *"enthalten", "umfassen"* und *"beinhalten"* den Begriff *"bestehen aus"*;

Durch die Verwendung der polyfunktionellen (Meth)acrylat-Verbindung in Kombination mit der polyfunktionellen Thiolverbindung als Härter kann auf die Verwendung von gesundheitsgefährdenden und kennzeichnungspflichtigen Isocyanaten vollständig verzichtet werden kann. Die aus dem erfindungsgemäßen Reaktionsgemisch hergestellten Brandschutzelemente zeichnen sich durch eine erhöhte Aschebildung und ein verbessertes Expansionsverhalten bei Temperatureinwirkung, wie beispielsweise im Brandfall aus.

Das erfindungsgemäße Reaktionsgemisch umfasst mindestens eine polyfunktionelle (Meth)acrylat-Verbindung und mindestens ein polyfunktionelles Thiol. Beim Vermischen reagieren die Thiolgruppen des polyfunktionellen Thiols über eine Michael-Addition (1,4-Addition) mit der polyfunktionellen (Meth)acrylat-Verbindung unter Ausbildung einer Schwefel-Kohlenstoffbindung. Durch diese Härtungsreaktion wird die Polymermatrix des Brandschutzelementes ausgebildet.

Im Allgemeinen wird angenommen, dass beim Umsetzen eines Thiols mit einer Funktionalität von zwei mit einer (Meth)acrylat-Verbindung mit einer Funktionalität von zwei überwiegend lineare Strukturen ausgebildet werden. Oftmals müssen zur Herstellung einer Bindemittelmatrix eines Brandschutzelementes jedoch molekulare Strukturen erzeugt werden, die verzweigt und/oder vernetzt sind, wodurch es notwendig ist, dass entweder das polyfunktionelle (Meth)acrylat und/oder das polyfunktionelle Thiol eine Funktionalität von größer zwei aufweist. Vorzugsweise haben daher das polyfunktionelle (Meth)acrylat oder das polyfunktionelle Thiol oder beide eine Funktionalität von größer zwei.

### Polyfunktionelle (Meth)acrylat-Verbindung

Das Reaktionsgemisch umfasst mindestens eine polyfunktionelle (Meth)acrylat-Verbindung. Polyfunktionell bedeutet im Sinne der vorliegenden Erfindung, dass die Verbindung mindestens zwei (Meth)acrylatgruppen aufweist.

Prinzipiell kann die polyfunktionelle (Meth)Acrylat-Verbindung über eine breite Vielzahl von Grundgerüsten verfügen, an die die (Meth)acrylatgruppen angebunden sind. Beispiele geeigneter Di(meth)acrylate umfassen, sind aber nicht darauf beschränkt: Ethylenglykol-di(meth)acrylat, Propylenglykol-di(meth)acrylat, Diethylenglykol-di(meth)acrylat, Dipropylenglykol-di(meth)acrylat, Triethylenglykol-di(meth)acrylat, Tripropylenglykol-di(meth)acrylat, Tertraethylenglykol-di(meth)acrylat, Tetrapropylenglykol-di(meth)acrylat, Polyethylenglykol-di(meth)acrylat, Polypropylenglykol-di(meth)acrylat, einfach oder mehrfach ethoxyliertes Bisphenol A-Di(meth)acrylat, Bisphenol A diglycidylether-di(meth)acrylat, Resorcinoldiglycidylether-di(meth)acrylat, 1,3-Propandiol-di(meth)acrylat, 1,4-Butanediol-di(meth)acrylat, 1,5-Pentandiol-di(meth)acrylat, 1,6-Hexandiol-di(meth)acrylat, Neopentylglykol-di(meth)acrylat, Cyclohexanedimethanol-di(meth)acrylat, einfach oder mehrfach ethoxyliertes Neopentylglykol-di(meth)acrylat, einfach oder mehrfach propoxyliertes Neopentylglykol-di(meth)acrylat, einfach oder mehrfach ethoxyliertes Cyclohexandimethanol- di(meth)acrylat, propoxyliertes Cyclohexandimethanol-di(meth)acrylat, Arylurethan- di(meth)acrylate, aliphatisches Urethan-di(meth)acrylat, Polyester-di(meth)acrylat und Gemische davon.

Beispiele geeigneter Tri(meth)acrylate umfassen, sind aber nicht darauf beschränkt: Trimethylolpropan-tri(meth)acrylat, trifunktionelles (Meth)acrylsäure-s-triazin, Glycerol-tri(meth)acrylat, einfach oder mehrfach ethoxyliertes Trimethylolpropan-tri(meth)acrylat, einfach oder mehrfach propoxyliertes Trimethylolpropan-tri(meth)acrylat, Tris(2-hydroxyethyl)isocyanurat-tri(meth)acrylat, einfach oder mehrfach ethoxyliertes Glycerol-tri(meth)acrylat, einfach oder mehrfach propoxyliertes Glycerol-tri(meth)acrylat, Pentaerythritol-tri(meth)acrylat, Arylurethan-tri(meth)acrylate, aliphatische Urethan-tri(meth)acrylate, Melamin-tri(meth)acrylate, Epoxy-Novolac-tri(meth)acrylate, aliphatisches Epoxy-tri(meth)acrylat, Polyester-tri(meth)acrylat und Gemische davon.

Beispiele geeigneter Tetra(meth)acrylate umfassen, sind aber nicht darauf beschränkt: Di(trimethylolpropan)-tetra(meth)acrylat, Pentaerythritol-tetra(meth)acrylat, einfach oder mehrfach ethoxyliertes Pentaerythritol-tetra(meth)acrylat, einfach oder mehrfach propoxyliertes Pentaerythritol-tetra(meth)acrylat, Dipentaerythritol-tetra(meth)acrylat, einfach oder mehrfach ethoxyliertes Dipentaerythritol-tetra(meth)acrylat, einfach oder mehrfach propoxyliertes Dipentaerythritol-tetra(meth)acrylat, Arylurethan-tetra(meth)acrylate, aliphatische Urethan-tetra(meth)acrylate, Melamin-tetra(meth)acrylate, Epoxy-Novolac- tetra(meth)acrylate, Polyester-tetra(meth)acrylate und Gemische davon. Es können auch Gemische der polyfunktionellen (Meth)acrylate untereinander verwendet werden.

### Polyfunktionelle Thiolverbindung

Das Reaktionsgemisch umfasst mindestens eine polyfunktionelle Thiolverbindung. Polyfunktionell bedeutet im Sinne der vorliegenden Erfindung, dass die Verbindung mindestens zwei Thiolgruppen aufweist. Zweckmäßig kann jede Thiolverbindung mit mindestens zwei Thiolgruppen verwendet werden. Bevorzugt handelt es sich dabei um Thiol-funktionalisierte Verbindungen, wobei die Thiol-Gruppe (-SH) die funktionelle Gruppe bildet.

Zweckmäßig kann als Thiol-funktionalisierte Verbindung jede Verbindung verwendet werden, welche über mindestens zwei Thiolgruppen verfügt. Jede Thiolgruppe ist dabei entweder direkt oder über einen Linker an ein Gerüst angebunden. Die Thiol-funktionalisierte Verbindung der vorliegenden Erfindung kann über irgendeines einer breiten Vielzahl von Gerüsten verfügen, wobei diese gleich oder unterschiedlich sein können.

Vorzugsweise ist das Gerüst ein Monomer, ein Oligomer oder ein Polymer.

In einigen Ausführungsformen der vorliegenden Erfindung umfassen die Gerüste Monomere, Oligomere oder Polymere mit einem Molekulargewicht (M_{w}) von 50.000 g/mol oder weniger, bevorzugt 25.000 g/mol oder weniger, stärker bevorzugt 10.000 g/mol oder weniger, noch stärker bevorzugt 5.000 g/mol oder weniger, noch stärker bevorzugt 2.000 g/mol oder weniger, und am stärksten bevorzugt 1.000 g/mol oder weniger.

Als Monomere, die die als Gerüste geeignet sind, können beispielhaft Alkandiole, Alkylenglykole, Zucker, mehrwertige Derivate davon oder Gemische davon und Amine, wie Ethylendiamin und Hexamethylendiamin, und Thiole erwähnt werden. Als Oligomere oder Polymere, die als Gerüste geeignet sind, können folgende beispielhaft erwähnt werden: Polyalkylenoxid, Polyurethan, Polyethylenvinylacetat, Polyvinylalkohol, Polydien, hydriertes Polydien, Alkyd, Alkydpolyester, (Meth)acrylpolymer, Polyolefin, Polyester, halogeniertes Polyolefin, halogenierter Polyester, Polymercaptan, sowie Copolymere oder Gemische davon.

In einer bevorzugten Ausführungsform der Erfindung ist das Gerüst ein mehrwertiger Alkohol oder ein mehrwertiges Amin, wobei diese monomer, oligomer oder polymer sein können. Stärker bevorzugt ist das Gerüst ein mehrwertiger Alkohol. Als mehrwertige Alkohole, die als Gerüste geeignet sind, können dabei folgende beispielhaft erwähnt werden: Alkandiole, wie Butandiol, Pentandiol, Hexandiol, Alkylenglykole, wie Ethylenglykol, Propylenglykol und Polypropylenglykol, Glycerin, 2-(Hydroxymethyl)propan-1,3-diol,1,1,1-Tris(hydroxymethyl)ethan, 1,1,1-Trimethylolpropan, Di(trimethylolpropan), Tncyclodecandimethylol, 2,2,4-Trimethyl-1,3-pentandiol, Bisphenol A, Cyclohexandimethanol, alkoxylierte und/oder ethoxylierte und/oder propoxylierte Derivate von Neopentylglykol, Tertraethylenglykolcyclohexandimethanol, Hexandiol, 2-(Hydroxymethyl)propan-1,3-diol, 1,1,1-Tris(hydroxymethyl)ethan, 1,1,1-Trimethylolpropan und Rizinusöl, Pentaerythritol, Zucker, mehrwertige Derivate davon oder Gemische davon.

Als Linker können beliebige Einheiten, welche geeignet sind, Gerüst und funktionelle Gruppe zu verbinden, verwendet werden. Für Thiol-funktionalisierte Verbindungen ist der Linker bevorzugt ausgewählt unter den Strukturen (I) bis (XI).
1: Bindung zur funktionellen Gruppe
2: Bindung zum Gerüst

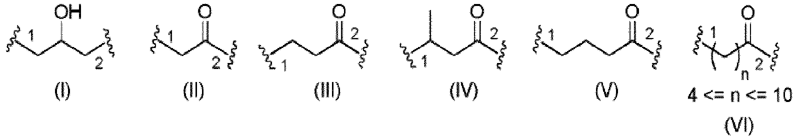

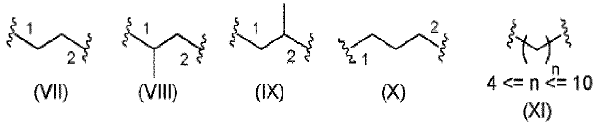

Als Linker für Thiol-funktionalisierte Verbindungen besonders bevorzugt sind die Strukturen (I), (II), (III) und (IV).

Besonders bevorzugte Thiol-funktionalisierte Verbindungen sind Ester der α-Thioessigsäure (2-Mercaptoacetate), β-Thiopropionsäure (3-Mercaptopropionate) und 3-Thiobuttersäure (3-Mercaptobutyrate) mit Monoalkoholen, Diolen, Triolen, Tetraolen, Pentaolen oder anderen Polyolen sowie 2-Hydroxy-3-mercaptopropylderivate von Monoalkoholen, Diolen, Triolen, Tetraolen, Pentaolen oder anderen Polyolen. Auch Gemische von Alkoholen können hierbei als Basis für die Thiol-funktionalisierte Verbindung verwendet werden.

Als besonders geeignete Thiol-funktionalisierte Verbindungen können beispielhaft erwähnt werden: Glykol-bis(2-mercaptoacetat), Glykol-bis(3-mercaptopropionat), 1,2-Propylenglykol-bis(2-mercaptoacetat), 1,2-Propylenglykol-bis(3-mercaptopropionat), 1,3-Propylenglykol-bis(2-mercaptoacetat), 1,3-Propylenglykol-bis(3-ercaptopropionat), Tris(hydroxymethyl)methan-tris(2-mercaptoacetat), Tris(hydroxymethyl)methan-tris(3-mercaptopropionat), 1,1,1-Tris(hydroxymethyl)ethan-tris(2-mercaptoacetat), 1,1,1-Tris(hydroxymethyl)ethan-tris(3-mercaptopropionat), 1,1,1-Trimethylolpropan-tris(2-mercaptoacetat), ethoxyliertes 1,1,1-Trimethylolpropan-tris(2-mercaptoacetat), propoxyliertes 1,1,1-Trimethylolpropan-tris(2-mercaptoacetat), 1,1,1-Trimethylolpropan-tris(3-mercaptopropionat), ethoxyliertes 1,1,1-Trimethylolpropan-tris(3-mercaptopropionat), propoxyliertes Trimethylolpropan-tris(3-mercaptopropionat), 1,1,1-Trimethylolpropan-tris(3-mercaptobutyrat), Pentaerythritol-tris(2-mercaptoacetat), Pentaerythritol-tetrakis(2-mercaptoacetat), Pentaerythritol-tris(3-mercaptopropionat), Pentaerythritol-tetrakis(3-mercaptopropionat), Pentaerythritol-tris(3-mercaptobutyrat), Pentaerythritol-tetrakis(3-mercaptobutyrat), Capcure 3-800 (BASF), GPM-800 (Gabriel Performance Products), Capcure LÖF (BASF), GPM-800LO (Gabriel Performance Products), KarenzMT PE-1 (Showa Denko), 2-Ethylhexylthioglykolat, iso-Octylthioglykolat, Di(n-butyl)thiodiglykolat, Glykol-di-3-mercaptopropionat, 1,6-Hexandithiol, Ethylenglykol- bis(2-mercaptoacetat) und Tetra(ethylenglykol)dithiol.

Die Thiol-funktionalisierte Verbindung kann alleine oder als Gemisch von zwei oder mehreren, unterschiedlichen Thiol-funktionalisierten Verbindungen eingesetzt werden. Je nach Funktionalität der Thiol-funktionalisierten Verbindung können der Vernetzungsgrad des Bindemittels und somit zum einen die Festigkeit des Brandschutzelements, als auch dessen elastische Eigenschaften eingestellt werden.

In einer bevorzugten Ausführungsform der Erfindung werden Thiol-funktionalisierte Verbindungen mit einem Polysulfid-Grundgerüst verwendet werden. Die folgenden Bis-(ethylenoxy)-methan-Verbindungen mit Disulfidbrücken und reaktiven endständigen Mercaptangruppen (alle von Toray Fine Chemicals) können als Beispiel genannt werden: Thiokol^{®} LP3, Thiokol^{®} LP33, Thiokol^{®} LP23, Thiokol^{®} LP980, Thiokol^{®} LP2, Thiokol^{®} LP32, Thiokol^{®} LP12, Thiokol^{®} LP31, Thiokol^{®} LP55, Thiokol^{®} LP56. Bevorzugt werden Thiol-funktionalisierte Verbindungen mit einem Polysulfid-Grundgerüst in Kombination mit mindestens einer weiteren polyfunktionellen Thiolverbindung eingesetzt.

Im Reaktionsgemisch der vorliegenden Erfindung kann der relative Anteil an (Meth)acrylat-Verbindungen zu Thiolverbindungen durch das reaktive Äquivalentverhältnis, welches das Verhältnis der Anzahl aller (Meth)acrylatgruppen im Reaktionsgemisch zu der Anzahl an Thiolgruppen im Reaktionsgemisch ist, charakterisiert werden. Das reaktive Äquivalentverhältnis beträgt 0.3 bis 3:1, bevorzugt 0.4 bis 2:1, stärker bevorzugt 0.6 bis 1.5:1.

Erfindungsgemäß enthält das Reaktionsgemisch mindestens ein dämmschichtbildendes Additiv, wobei das Additiv sowohl eine einzelne Verbindung als auch ein Gemisch von mehreren Verbindungen umfassen kann.

Zweckmäßig werden als dämmschichtbildende Additive solche eingesetzt, die unter Hitzeeinwirkung aufblähen und eine isolierende Schicht aus schwerentflammbarem Material bilden. Die Bildung einer voluminösen, isolierenden Schicht, nämlich einer Ascheschicht, kann durch die chemische Reaktion eines Gemisches aus entsprechenden aufeinander abgestimmten Verbindungen, die bei Hitzeeinwirkung miteinander reagieren, gebildet werden. Solche Systeme sind dem Fachmann unter dem Begriff chemische Intumeszenz bekannt und können erfindungsgemäß eingesetzt werden. Alternativ kann die voluminöse, isolierende Schicht durch physikalische Intumeszenz gebildet werden. Beide Systeme können jeweils allein oder zusammen als Kombination erfindungsgemäß eingesetzt werden.

Für die Ausbildung einer intumeszierenden Schicht durch chemische Intumeszenz sind allgemein wenigstens drei Komponenten erforderlich, ein Kohlenstofflieferant, ein Dehydrierungskatalysator und ein Gasbildner, die häufig in einem Bindemittel enthalten sind. Bei Hitzeeinwirkung erweicht das Bindemittel und die Brandschutzadditive werden freigesetzt, so dass diese im Falle der chemischen Intumeszenz miteinander reagieren oder im Falle der physikalischen Intumeszenz sich aufblähen können. Durch thermische Zersetzung wird aus dem Dehydrierungskatalysator die Säure gebildet, die als Katalysator für die Carbonifizierung des Kohlenstofflieferanten dient. Gleichzeitig zersetzt sich der Gasbildner thermisch unter Bildung inerter Gase, die ein Aufblähen des carbonisierten (verkohlten) Materials und gegebenenfalls das erweichte Bindemittel unter Bildung eines voluminösen, isolierenden Schaums bewirkt.

In einer Ausführungsform der Erfindung, in der die isolierende Schicht durch chemische Intumeszenz gebildet wird, umfasst das dämmschichtbildende Additiv mindestens einen Kohlenstoffgerüstbildner sofern das Bindemittel nicht als solcher verwendet werden kann, mindestens einen Säurebildner, mindestens ein Gasbildner und mindestens einen anorganischen Gerüstbildner. Die Komponenten des Additivs werden insbesondere so ausgewählt, dass sie einen Synergismus entwickeln können, wobei einige der Verbindungen mehrere Funktionen erfüllen können.

Als Kohlenstofflieferant kommen die in intumeszierenden Flammschutzmitteln üblicherweise verwendeten und dem Fachmann bekannten Verbindungen in Betracht, wie stärkeähnliche Verbindungen, z.B. Stärke und modifizierte Stärke, und/oder mehrwertige Alkohole (Polyole), wie Saccharide und Polysaccharide und/oder ein thermoplastisches oder duroplastisches polymeres Harzbindemittel, wie ein Phenolharz, ein Harnstoffharz, ein Polyurethan, Polyvinylchlorid, Poly(meth)acrylat, Polyvinylacetat, Polyvinylalkohol, ein Silikonharz und/oder einen Kautschuk. Geeignete Polyole sind Polyole aus der Gruppe Zucker, Pentaerythrit, Dipentaerythrit, Tripentaerythrit, Polyvinylacetat, Polyvinylalkohol, Sorbitol, EO-Polyole, PO-Polyole sowie EO-PO-Polyole. Bevorzugt werden Pentaerythrit, Dipentaerythrit oder Polyvinylacetat eingesetzt.

Es sei erwähnt, dass das Polymer, welche als Bindemittel dient, im Brandfall selbst auch die Funktion eines Kohlenstofflieferanten haben kann, so dass die Zugabe eines zusätzlichen Kohlenstofflieferanten nicht immer erforderlich ist.

Als Dehydrierungskatalysatoren bzw. Säurebildner kommen die in intumeszierenden Brandschutzformulierungen üblicherweise verwendeten und dem Fachmann bekannten Verbindungen in Betracht, wie ein Salz oder ein Ester einer anorganischen, nicht flüchtigen Säure, ausgewählt unter Schwefelsäure, Phosphorsäure oder Borsäure. Im Wesentlichen werden phosphorhaltige Verbindungen eingesetzt, deren Palette sehr groß ist, da sie sich über mehrere Oxidationsstufen des Phosphors erstrecken, wie Phosphine, Phosphinoxide, Phosphoniumverbindungen, Phosphate, elementarer roter Phosphor, Phosphite und Phosphate. Als Phosphorsäureverbindungen können beispielhaft erwähnt werden: Monoammoniumphosphat, Diammoniumphosphat, Ammoniumphosphat, Ammoniumpolyphosphat, Melaminphosphat, Melaminharzphosphate, Kaliumphosphat, Polyolphosphate wie etwa Pentaerythritphosphat, Glyzerinphosphat, Sorbitphosphat, Mannitphosphat, Dulcitphosphat, Neopentylglykolphosphat, Ethylenglykolphosphat, Dipentaerythritphosphat und dergleichen. Bevorzugt wird als Phosphorsäureverbindung ein Polyphosphat oder ein Ammoniumpolyphosphat eingesetzt. Unter Melaminharzphosphaten sind dabei Verbindungen wie Umsetzungsprodukte aus Lamelite C (Melamin-Formaldehyd-Harz) mit Phosphorsäure zu verstehen. Als Schwefelsäureverbindungen können beispielhaft erwähnt werden: Ammoniumsulfat, Ammoniumsulfamat, Nitroanilinbisulfat, 4-Nitroanilin-2-sulfonsäure und 4,4-Dinitrosulfanilamid und dergleichen. Als Borsäureverbindung kann Melaminborat beispielhaft erwähnt werden.

Als Gasbildner kommen die üblicherweise in Flammschutzmitteln verwendeten und dem Fachmann bekannten Verbindungen in Betracht, wie Cyanursäure oder Isocyansäure und deren Derivate, Melamin und deren Derivate. Solche sind Cyanamid, Dicyanamid, Dicyandiamid, Guanidin und dessen Salze, Biguanid, Melamincyanurat, Cyansäuresalze, Cyansäureester und -amide, Hexamethoxymethylmelamin, Dimelaminpyrophosphat, Melaminpolyphosphat, Melaminphosphat. Bevorzugt wird Hexamethoxymethylmelamin oder Melamin (Cyanursäureamid) eingesetzt.

Geeignet sind ferner Komponenten, die ihre Wirkungsweise nicht auf eine einzige Funktion beschränkt, wie Melaminpolyphosphat, das sowohl als Säurebildner als auch als Gasbildner wirkt. Weitere Beispiele sind in der GB 2 007 689 A1, EP 139 401 A1 und US-3 969 291 A1 beschrieben.

In einer Ausführungsform der Erfindung, in der die isolierende Schicht durch physikalische Intumeszenz gebildet wird, umfasst das dämmschichtbildende Additiv mindestens eine thermisch expandierbare Verbindung, wie eine Graphit-Interkalationsverbindung, die auch als Blähgraphit bekannt sind. Diese können ebenfalls im Bindemittel, insbesondere homogen enthalten sein.

Als Blähgraphit kommen beispielsweise bekannte Einlagerungsverbindungen von Schwefelsäure, Salpetersäure, Essigsäure, Lewissäuren und/oder anderen starken Säuren in Graphit in Frage. Diese werden auch als Graphitsalze bezeichnet. Bevorzugt sind Blähgraphite, die bei Temperaturen von beispielsweise 120 bis 350°C unter Aufblähen SO₂, SO₃, CO₂, H₂O, NO und/oder NO₂ abgeben. Der Blähgraphit kann beispielsweise in Form von Plättchen mit einem maximalen Durchmesser im Bereich von 0,1 bis 5 mm vorliegen. Vorzugsweise liegt dieser Durchmesser im Bereich 0,5 bis 3 mm. Für die vorliegende Erfindung geeignete Blähgraphite sind im Handel erhältlich. Im Allgemeinen sind die Blähgraphitteilchen in den erfindungsgemäßen Brandschutzelementen gleichmäßig verteilt.

In einer weiteren Ausführungsform der Erfindung wird die isolierende Schicht sowohl durch chemische als auch durch physikalische Intumeszenz gebildet, so dass das dämmschichtbildende Additiv sowohl einen Kohlenstofflieferanten, einen Dehydrierungskatalysator und ein Gasbildner als auch thermisch expandierbare Verbindungen umfasst.

Prinzipiell kann das dämmschichtbildende Additiv in einem großen gewichtsprozentualen Bereich im Reaktionsgemisch enthalten sein, nämlich bevorzugt in einer Menge von 10 bis 70 Gew.-% bezogen auf das Gesamtgewicht des Reaktionsgemischs. Wird die isolierende Schicht durch physikalische Intumeszenz gebildet, ist das dämmschichtbildende Additiv vorzugsweise in einer Menge von 10 bis 40 Gew.-% bezogen auf das Gesamtgewicht des Reaktionsgemischs enthalten. Um hier eine möglichst hohe Intumeszenzrate zu bewirken, wird der Anteil des dämmschichtbildenden Additivs in der Gesamtformulierung so hoch wie möglich eingestellt, wobei darauf geachtet werden muss, dass die Viskosität der Zusammensetzung nicht zu hoch wird, damit sich die Zusammensetzung noch gut verarbeiten lässt. Bevorzugt beträgt der Anteil 12 bis 35 Gew.-% und besonders bevorzugt 15 bis 30 Gew.-%, bezogen auf das Gesamtgewicht des Reaktionsgemischs.

Da die im Brandfall gebildete Aschekruste in der Regel zu instabil ist und abhängig von deren Dichte und Struktur etwa durch Luftströmungen Verblasen werden kann, was sich negativ auf die isolierende Wirkung der Beschichtung auswirkt, wird zu den eben aufgeführten Komponenten bevorzugt mindestens ein Aschekrustenstabilisator gegeben. Die prinzipielle Wirkungsweise ist dabei die, dass die an sich sehr weichen entstehenden Kohlenstoffschichten durch anorganische Verbindungen mechanisch verfestigt werden. Die Zugabe eines solchen Aschekrustenstabilisators trägt zu einer wesentlichen Stabilisierung der Intumeszenzkruste im Brandfall bei, da diese Additive die mechanische Festigkeit der intumeszierenden Schicht erhöhen und/oder deren Abtropfen verhindern. Als Aschekrustenstabilisatoren bzw. Gerüstbildner kommen die üblicherweise in Brandschutzformulierungen verwendeten und dem Fachmann bekannten Verbindungen in Betracht, beispielsweise Blähgraphit und teilchenförmige Metalle, wie Aluminium, Magnesium, Eisen und Zink. Das teilchenförmige Metall kann in Form eines Pulvers, von Plättchen, Schuppen, Fasern, Fäden und/oder Whiskers vorliegen, wobei das teilchenförmige Metall in Form von Pulver, Plättchen oder Schuppen eine Teilchengrösse von <50 µm, vorzugsweise von 0,5 bis 10 µm besitzt. Im Fall der Verwendung des teilchenförmigen Metalls in Form von Fasern, Fäden und/oder Whiskers ist eine Dicke von 0,5 bis 10 µm und eine Länge von 10 bis 50 µm bevorzugt. Als Aschekrustenstabilisator kann alternativ oder zusätzlich ein Oxid oder eine Verbindung eines Metalls aus der Aluminium, Magnesium, Eisen oder Zink umfassenden Gruppe eingesetzt werden, insbesondere Eisenoxid, vorzugsweise Eisentrioxid, Titandioxid, ein Borat, wie Zinkborat und/oder eine Glasfritte aus niedrig schmelzenden Gläsern mit einer Schmelztemperatur von vorzugsweise bei oder oberhalb 400°C, Phosphat- oder Sulfatgläsern, Melaminpolyzinksulfaten, Ferrogläsern oder Calziumborosilikaten. Die Zugabe eines solchen Aschekrustenstabilisators trägt zu einer wesentlichen Stabilisierung der Aschekruste im Brandfall bei, da diese Additive die mechanische Festigkeit der intumeszierenden Schicht erhöhen und/oder deren Abtropfen verhindern. Beispiele derartiger Additive finden sich auch in US 4 442 157 A, US 3 562 197 A, GB 755 551 A sowie EP 138 546 A1.

Daneben können Aschekrustenstabilisatoren wie Melaminphosphat oder Melaminborat enthalten sein.

Optional können dem erfindungsgemäßen Reaktionsgemisch ein oder mehrere Flammschutzmittel zugesetzt werden, wie Phosphatester, halogenhaltige Verbindungen wie z.B. Tri-(2-chlorisopropyl)-phosphat (TOPP), Tris(2-ethylhexyl)phosphat, Dimethylpropanphosphonat, Triethylphosphat und dergleichen. Einige solcher Verbindungen sind beispielsweise beschrieben in S. V Levchik, E. D Weil, Polym. Int. 2004, 53, 1901-1929 beschrieben. Die Flammschutzmittel können bevorzugt in einer Menge von 3 bis 6 Gew.-%, bezogen auf die gesamte Zusammensetzung, enthalten sein.

Erfindungsgemäß enthält das Reaktionsgemisch ein Treibmittel. Als Treibmittel kommen prinzipiell alle dem Fachmann bekannten chemischen und physikalischen Treibmittel in Betracht. Hierzu zählen insbesondere chemische Treibmittel, die in der Lage sind, CO₂ oder H₂ freizusetzen.

Vorzugsweise enthält das Reaktionsgemisch als Treibmittel mindestens eine Treibmittelmischung, welche ein oder mehrere Verbindungen umfasst, die in der Lage sind durch Reaktion Wasserstoff (H₂) freizusetzen.

Hierzu kann die Reaktion zwischen folgenden Verbindungen eingesetzt werden:
(i) einem oder mehreren unedlen Metallen (z.B. Aluminium, Eisen oder Zink) mit Basen (z.B. ein oder mehrere Alkalimetallhydroxide, wie Natrium-, Kalium- oder Lithiumhydroxid) oder mit ein oder mehreren Säuren, wie oben bei den Carbonaten definiert (vorzugsweise anorganische Säure);
(ii) Metallhydriden (z.B. Natriumhydrid oder Lithiumaluminiumhydrid) mit Wasser, oder
(iii) einer Verbindung, die Si-gebundene Wasserstoffatome aufweist (z.B. Polymethylhydrogensiloxan, bekannt auch als Polymethylhydrosiloxan, aber auch andere Polyalkyl- oder Polyarylhydrogensiloxane) mit Protonendonoren (z.B. Wasser). Geeignet sind u.a. lineare Polyhydrogensiloxane, Tetramere, Copolymere von Dimethysiloxan und Methylhydrosiloxan, Trimethylsilylterminierte Polyhydrogensiloxane, Hydrid-terminierte Polydimethylsiloxane, Triethylsilyl-terminierte Polyethylhydrosiloxane, Hydrid-terminierte Copolymere aus Polyphenylmethylsiloxan und Methylhydrosiloxan und dergleichen.

Hierbei ist die Verwendung einer Treibmittelmischung umfassend eine Verbindung, die Si-gebundene Wasserstoffatome aufweist bevorzugt. Besonders geeignete Si-H-haltige Verbindungen sind Organowasserstoffsiloxane wie Poly(methylhydrogensiloxan) (PMHS) mit unterschiedlichen Mw-Werten. Kommerziell erhältlich sind hier beispielsweise SilForce SS4300C (Momentive) und BLUESIL WR 68 (Elkem-Silikone).

Geeignete Protonendonatoren sind z. B. Wasser und OH-haltige Verbindungen, insbesondere solche mit geringerem Molekulargewicht wie z. B. Methanol, Ethanol, Propanol, Butanol, Pentanol, Hexanol, Heptanol, verwandte Diole wie z. B. (Tri)ethylenglykol und Propylenglykol, verwandte cyclische und aromatische Alkohole und Diole wie z. B. Cyclohexanol und Benzylalkohol sowie Mischungen davon).

In einer bevorzugten Ausführungsform der Erfindung umfasst die Treibmittelmischung des Reaktionsgemischs Polymethylhydrosilan und Wasser. Alternativ kann auch ein Wasser/1,4-Butandiol Gemisch eingesetzt werden.

In einer bevorzugten Ausführungsform der Erfindung ist Wasser in der Treibmittelmischung in einem Anteil von 1 bis 3 Gew.-% enthalten und Polymethylhydrosilan in einem Anteil von 3 bis 5 Gew.-%, jeweils bezogen auf das Gesamtgewicht des Reaktionsgemischs.

Besonders bevorzugt ist Wasser zu höchstens 3, bevorzugt höchstens 2 Gew.-% enthalten, so dass eine ausreichende Menge Treibmittel zur Schäumung entsteht, aber noch kein Schrumpf auftritt, d.h. dass die aufgeschäumten Blasen so lange stabil sind, bis die Polymervernetzung vollständig verlaufen ist.

Erfindungsgemäß umfasst das Reaktionsgemisch einen Katalysator, der sowohl die Reaktion der (Meth)acrylatgruppen mit den Thiolgruppen als auch Schäumungsreaktion begünstigt. Hierbei werden vorteilhaft keine metallbasierten Katalysatoren eingesetzt, da diese auch häufig gesundheitsgefährdend und kennzeichnungspflichtig unter HSE-Gesichtspunkten sind.

In einer bevorzugten Ausführungsform der Erfindung umfasst das Reaktionsgemisch eine organische Base als Katalysator. Dies begünstigt vorteilhaft das Schäumen und Aushärten des Reaktionsgemischs. Organische Basen sind vorteilhaft gegenüber anorganischen Basen, da sie üblicherweise nicht in Wasser gelöst werden müssen.

Bevorzugt ist die organische Base als Katalysator in einer Menge von 0-10 Gew.-%, insbesondere 1-5 Gew.-%, im Reaktionsgemisch enthalten bezogen auf das Gesamtgewicht des Reaktionsgemischs.

Bevorzugt ist die organische Base ausgewählt aus 1,1,3,3-tetramethylguanidine (TMG), 1-Phenylguanidin, 1,3,-Diphenylguanidin, 1-(*o*-Tolyl)biguanide, 1,5-diazabicyclo [4.3.0] - non-5-ene (DBN), 1,8-Diazabicyclo-[5.4.0]-undec-7-ene (DBU), *N*,*N*,*N',N*'-Tetrakis(2-Hydroxypropyl)ethylenediamine (Quadrol^{®}), 1,4-diazabicyclo[2.2.2]octane (DABCO), 4-Dimethylaminopyridine (DMAP), N,N,N',N",N"-pentamethyldiethylenetriamine (PMDETA), Triethylamin, Tributylamin und Trioctylamin.

In einer besonders bevorzugten Variante dieser Ausführung ist die organische Base 1,1,3,3-Tetramethylguanidin (TMG).

Sofern erforderlich kann das erfindungsgemäße Reaktionsgemisch ferner einen Zellregulatur/-stabilisator enthalten. Als Zellregulaturen/-stabilisatoren eignen sich beispielsweise Alkylpolyglycoside. Diese sind nach dem Fachmann an sich bekannten Methoden durch Umsetzung von längerkettigen Monoalkoholen mit Mono-, Di- oder Polysacchariden erhältlich. Die längerkettigen Monoalkohole, die gegebenenfalls auch verzweigt sein können, weisen bevorzugt 4 bis 22 C-Atome, bevorzugt 8 bis 18 C-Atome und besonders bevorzugt 10 bis 12 C-Atome in einem Alkylrest auf. Im Einzelnen genannt seien als längerkettige Monoalkohole 1-Butanol, 1-Propanol, 1-Hexanol, 1-Oktanol, 2-Ethylhexanol, 1-Decanol, 1-Undecanol, 1-Dodecanol (Laurylalkohol), 1-Tetradecanol (Myristylalkohol) und 1- Octadecanol (Stearylalkohol). Es können auch Gemische der genannten längerkettigen Monoalkohole eingesetzt werden. Weitere Schaumstabilisatoren umfassen an sich bekannte anionische, kationische, amphotere und nichtionische Tenside sowie Mischungen hieraus. Bevorzugt werden Alkylpolyglycoside, EO/PO-Blockcopolymere, Alkyl- oder Arylalkoxylate, Siloxanalkoxylate, Polyether-Polysiloxane, Ester der Sulfobernsteinsäure und/oder Alkali- oder Erdalkalimetallalkanoate eingesetzt. Besonders bevorzugt werden EO/PO-Blockcopolymere eingesetzt.

In einer Ausführungsform enthält das Reaktionsgemisch ferner mindestens einen weiteren Bestandteil, ausgewählt unter Weichmachern, Vernetzungsmitteln, Bioziden, organischen und/oder anorganischen Zuschlagstoffen und/oder weiteren Additiven.

Das Reaktionsgemisch kann neben den bereits beschriebenen Additiven gegebenenfalls übliche Hilfsmittel wie Netzmittel, etwa auf Basis von Polyacrylaten und/oder Polyphosphaten, Farbstoffe, Fungizide, oder diverse Füllstoffe, wie Vermiculit, anorganische Fasern, Quarzsand, Mikroglaskugeln, Glimmer, Siliziumdioxid, Mineralwolle, und dergleichen enthalten.

Das erfindungsgemäße Reaktionsgemisch eignet sich in hervorragender Weise zur Herstellung von vorgeformten Brandschutzelementen.

Ein weiterer Gegenstand der vorliegenden Erfindung ist daher auch ein Verfahren zur Herstellung eines vorgeformten Brandschutzelements umfassend:
i) Bereitstellen einer Komponente A) durch Vermischen mindestens einer polyfunktionellen (Meth)acrylat-Verbindung, mindestens eines dämmschichtbildenden Additivs, mindestens einer polyfunktionellen Thiolverbindung und mindestens eines Treibmittels,
ii) Bereitstellen mindestens eines Katalysators,
iii) Mischen der Komponente A) und des Katalysators zur Herstellung des Reaktionsgemischs,
iv) Austragen des Reaktionsgemisches in eine Form oder eine Folie mit vordefinierter Geometrie;
v) Aufschäumen und Härten des Reaktionsgemisches und
vi) Entfernen des aufgeschäumten und ausgehärteten Reaktionsgemisches aus der Form oder der Folie.

Für das erfindungsgemäße Verfahren gelten in Bezug auf die polyfunktionelle (Meth)acrylat-Verbindung, das dämmschichtbildende Additiv, den Katalysator, das Treibmittel und die polyfunktionelle Thiolverbindung die vorstehenden Ausführungen in Bezug auf das Reaktionsgemisch in gleichem Maße.

Ein weiterer Gegenstand der vorliegenden Erfindung ist auch ein aus der erfindungsgemäßen Reaktionsmischung oder ein durch das erfindungsgemäße Verfahren hergestelltes Brandschutzelement. Unter dem Begriff "Brandschutzelement" im Sinne der vorliegenden Erfindung sind sämtliche Brandschutzabschottungsmaterialien in Gestalt eines definierten Formkörper zu verstehen, welche zum Schutz eines Feuerübertritts im Brandfall in Durchgangsöffnungen in Bauelementen, insbesondere Gebäudebauteilen, wie Wände und Decken, eingebracht werden. Hierzu zählen beispielsweise Brandschutzkissen, Brandschutzsteine und Profilelemente.

Das Brandschutzelement hat vorzugsweise einen rechteckigen Querschnitt. Dadurch lassen sich die Brandschutzelemente besonders einfach und lückenlos in einem Wand- oder Deckendurchbruch verarbeiten.

Die Brandschutzelemente können auf eine Länge von beispielsweise 80 cm zugeschnitten werden, um ein einfaches Handling beim Verpacken und beim Transport zu ermöglichen. Vor der Installation können die Profilstücke von einem Benutzer bei Bedarf zu kürzeren Stücken zugeschnitten werden.

Ebenfalls Gegenstand der Erfindung ist ein Bauteil umfassend ein erfindungsgemäßes, Brandschutzelement.

Die Erfindung wird im Folgenden anhand einer Reihe von Beispielen näher erläutert. Alle Beispiele und Abbildungen stützen den Umfang der Ansprüche. Die Erfindung ist jedoch nicht auf die spezifischen, in den Beispielen und Abbildungen gezeigten Ausführungsformen beschränkt.

### AUSFÜHRUNGSBEISPIELE

Alle hier aufgelisteten Bestandteile der Zusammensetzungen sind - soweit nicht anders angegeben - kommerziell erhältlich und wurden in der kommerziell üblichen Qualität eingesetzt.

Alle in den Beispielen gemachten %-Angaben beziehen sich auf das Gesamtgewicht der beschriebenen Zusammensetzung als Kalkulationsbasis, soweit nicht anders angegeben.

Liste der in den Beispielen und Referenzen verwendeten Bestandteile (Erklärung der Abkürzungen) sowie ihrer Handelsnamen und Bezugsquellen:

**Tabelle 1: Zusammenstellung der in den Beispielen verwendeten Bestandteile**

| | Beschreibung |
|---|---|
| 1,4-Butandioldimethacrylat (BDDMA) | Difunktionelles Methacrylat, ECEM |
| Thiocure^{®} 333 | Ethoxyliertes Trimethylolpropane tris(3-mercaptopropionat); Dichte 1.144 g/cm³; |
| | Hersteller: Bruno Bock |
| Thiokol^{®} LP3 | Flüssiges Polysulfidepolymer (Bis-(ethyleneoxy))-methane, enthält Disulfidbrücken sowie reaktive terminale Thiolgruppen), |
| | Hersteller: Toray International Europe GmbH |
| Dämmschichtbildendes Brandschutzadditiv | Dämmschichtbildendes Brandschutzadditiv auf Basis von Blähgraphit, Eisenoxidpigment und Fungizid |
| Polyhydrogenmethylsiloxan (PHMS) | Bestandteil der Treibmittelmischung |
| 1,1,3,3-Tetramethylguanidine | Organischer Katalysator |
| DABCO DC 198 | Silicon-Glycol-Copolymer (Zellöffner), |

| | Hersteller: Air Products Chemicals Europe |
|---|---|
| 1,4-Butandiol | Thermo Fischer GmbH |
| Wasser | Leitungswasser |

Zwei Ausführungsbeispiele wurden entsprechend Tabelle 2 hergestellt. Zur Herstellung eines Schaums mit einer bestimmten Dichte wurde eine entsprechende Menge der angegebenen Komponenten nacheinander in einem geeigneten Behälter (z.B. Pappbecher) mit einem Holzspatel bis zur Ausbildung einer homogenen Mischung mechanisch verrührt. Der Holzspatel wurde entfernt und man ließ die Mischung in dem zuvor abgedeckten Gefäß aufschäumen (das Gefäß muss während des kompletten Schäumungsprozesses verschlossen bleiben, um eine Dichte von 220-230 g/L zu gewährleisten).

**Tabelle 2: Zusammensetzung der erfindungsgemäßen Beispiele 1 und 2 [Gew.-%]**

| **Komponenten** | **Beispiel 1** | **Beispiel 2** |
|---|---|---|
| 1,4-Butandiol-dimethacrylat (BDDMA) | 14% | 14% |
| Thiocure^{®} 333 | 52% | 32% |
| Thiokol^{®} LP3 | 0% | 20% |
| Dämmschichtbildendes Brandschutzadditiv | 25% | 25% |
| Polymethylhydrosiloxan | 4% | 4% |
| 1,1,3,3-Tetramethylguanidin | 2% | 2% |
| DABCO DC 198 | 1% | 1% |
| 1,4-Butandiol | 0% | 2% |
| Wasser | 2% | 0% |

In der nachfolgenden Tabelle ist ein Vergleich der durchschnittlichen Expansionen bei Hitzeeinwirkung und der nach der Verbrennung durchschnittlich zurückbleibenden Asche beider Ausführungsbeispiele mit dem kommerziell erhältlichen Brandschutzstein CFS-BL Firestop Block (Fa. Hilti) gezeigt.

**Tabelle 3: Vergleich der Expansionseigenschaften und der zurückbleibenden Aschekruste zwischen dem Vergleichsbeispiel und den Ausführungsbeispielen 1 und 2**

| | **Vergleichsbeispiel** | **Beispiel 1** | **Beispiel 2** |
|---|---|---|---|
| **Expansionsverhältnis** | 87.5% | 159% | 115% |
| **Zurückbleibende Aschekruste** | 5.5% | 47% | 55% |

Man erkennt, dass beide erfindungsgemäßen Beispiele eine stärkere Expansion aufweisen sowie eine größere Ascheschicht nach Erhitzen auf über 1000 °C als das Vergleichsbeispiel. Eine stärkere Expansion zusammen mit einer vermehrten Aschebildung kann zu vorteilhaften Brandschutzeigenschaften im realen Brandtest führen. Die in Tabelle 3 angegebenen Werte wurden mittels mikro-thermomechanische Analyse bestimmt (mikro-TMA).

Zur Durchführung der mikro-thermomechanischen Analyse wurde in einem Tiegel (Aluminiumoxid, 900 µL) eine 2-5 mm dicke Schaumprobe mit einem Quarzgläschen (10 mm) bedeckt und mittels mikro-TMA (Firma: Mettler Toledo, Gerät: TMA/SDTA 2+ HT/1600/133) vermessen. Die Probe wurde mit einer Heizrate von 10 K/min von 30 auf 1100 °C erhitzt, die Gegenkraft betrug 0,02 N und der Luftstrom 70 mL/min. Es wurde die Änderung des Volumens in Abhängigkeit von der Temperatur und der Zeit gemessen.

## Patentansprüche

1. Reaktionsgemisch zur Herstellung eines Brandschutzelements umfassend
a. mindestens eine polyfunktionelle (Meth)acrylat-Verbindung,
b. mindestens eine polyfunktionelle Thiolverbindung,
c. mindestens ein dämmschichtbildendes Brandschutz-Additiv,
d. mindestens einen Katalysator und
e. mindestens ein Treibmittel.

2. Reaktionsgemisch gemäß Anspruch 1, **dadurch gekennzeichnet, dass** die polyfunktionelle (Meth)acrylat-Verbindung und / oder die polyfunktionelle Thiolverbindung eine Funktionalität > 2 aufweist.

3. Reaktionsgemisch gemäß Anspruch 1 oder 2, **dadurch gekennzeichnet, dass** das Treibmittel eine Treibmittelmischung mit Verbindungen umfasst, die nach deren Vermischen unter Bildung von Wasserstoff (H₂) miteinander reagieren.

4. Reaktionsgemisch gemäß Anspruch 3, **dadurch gekennzeichnet, dass** die Treibmittelmischung eine Verbindung mit Si-gebundenen Wasserstoffatomen aufweist.

5. Reaktionsgemisch gemäß Anspruch 4, **dadurch gekennzeichnet, dass** die Treibmittelmischung zusätzlich Wasser und/oder 1,4-Butandiol umfasst.

6. Reaktionsgemisch gemäß einem der vorhergehenden Ansprüche, **dadurch gekennzeichnet, dass** der Katalysator mindestens eine organische Base umfasst.

7. Reaktionsgemisch gemäß Anspruch 6, **dadurch gekennzeichnet, dass** die organische Base ausgewählt ist aus der Gruppe bestehend aus 1,4-Diazabicyclo[2.2.2]octan, 1,8-Diazabicyclo[5.4.0]undec-7-en und 1,1,3,3-Tetramethylguanidin.

8. Reaktionsgemisch gemäß einem der vorhergehenden Ansprüche, **dadurch gekennzeichnet, dass** das dämmschichtbildende Brandschutzadditiv aus Graphit-Interkallationsverbindungen, blähfähigem silikatischen Material oder Kombinationen davon ausgewählt ist.

9. Verfahren zur Herstellung eines Brandschutzelements umfassend:
i) Bereitstellen einer Komponente A) durch Vermischen mindestens einer polyfunktionellen (Meth-)Acrylat-Verbindung, mindestens eines dämmschichtbildenden Additivs, mindestens einer polyfunktionellen Thiolverbindung mindestens eines Treibmittels,
ii) Bereitstellen mindestens eines Katalysators,
iii) Mischen der Komponente A) und des Katalysators zur Herstellung eines Reaktionsgemischs,
iv) Austragen des Reaktionsgemisches in eine Form oder eine Folie mit vordefinierter Geometrie;
v) Aufschäumen und Härten des Reaktionsgemisches und
vi) Entfernen des aufgeschäumten und ausgehärteten Reaktionsgemisches aus der Form oder der Folie.

10. Brandschutzelement hergestellt aus einer Reaktionsmischung gemäß einem der Ansprüche 1 bis 8 oder hergestellt durch das Verfahren gemäß Anspruch 9.

11. Brandschutzelement gemäß Anspruch 10, **dadurch gekennzeichnet, dass** das Brandschutzelement ein Brandschutzkissen, ein Brandschutzstein oder ein Profilelement ist.

12. Bauteil umfassend ein Brandschutzelement gemäß einem der Ansprüche 10 oder 11.
